# EUROPEAN PATENT APPLICATION

(11) **EP 4 578 654 A1**
(43) Date of publication of application: **02.07.2025**
(21) Application number: 23862838.2
(22) Date of filing: 02.08.2023
(51) Int. Cl.: B41J 29/38, B41J 2/01

(54) **RECORDING DEVICE AND METHOD FOR CONTROLLING SAME**

(30) Priority: 09.09.2022 JP 2022143934
(71) Applicant: Canon Kabushiki Kaisha, Ohta-ku Tokyo 146-8501 (JP)
(72) Inventor: NISHIKAWA, Yukinori, Tokyo 146-8501 (JP); EZUMI, Yosuke, Tokyo 146-8501 (JP); OGUSHI, Takuhiro, Tokyo 146-8501 (JP); UEKI, Hideyuki, Tokyo 146-8501 (JP); AIDA, Takahiro, Tokyo 146-8501 (JP)
(74) Representative: WESER & Kollegen Patentanwälte PartmbB
(86) International application number: PCT/JP2023/028244
(87) International publication number: WO 2024/053295

(57) **Abstract**

A printing apparatus includes control means, output means for outputting at least one clock signal by oscillating with supplied power, at least one first time measurement means for measuring time in response to an input of the at least one clock signal, and power supply means for stopping power supply to the control means and continuing power supply to the output means and the at least one first time measurement means, in a standby state. When the printing apparatus is shifted from the standby state to an operating state, the control means executes predetermined processing if a time measurement value of the at least one first time measurement means exceeds a predetermined value, and when the printing apparatus shifts to the standby state, the control means resets the time measurement value of the at least one first time measurement means.

## Description

### TECHNICAL FIELD

The present invention relates to a printing apparatus and a method for controlling the same.

### BACKGROUND ART

Ink-jet printing apparatuses are representative of printing apparatuses that print images while causing a carriage to perform scanning. Typical ink-jet printing apparatuses are provided with a printing head in which ink ejection ports and printing elements, which are energy generation means such as heaters and piezoelectric elements for ejecting ink droplets, are arranged correspondingly. Ink-jet printing apparatuses print an image on a printing medium by moving the printing head in a main scanning direction and repeatedly performing print scanning to eject ink droplets onto the printing medium in a printing area and transport of the printing medium in a sub scanning direction that intersects the main scanning direction.

If the printing head of such an ink-jet printing apparatus is left for a long period of time without performing any printing operation, foreign substances such as ink residues and dust that may cause non-ejection of the ink adhere to the ejection ports of the printing head or the vicinity thereof. Therefore, apart from image printing, a preliminary ink ejection operation of ejecting ink is performed periodically before the printing operation. Furthermore, a recovery operation needs to be performed periodically, by sucking out the ink from the ejection ports so as to suck out foreign substances together with the ink or by wiping the area in the vicinity of the ejection ports with a thin plate-shaped member made of silicon rubber or the like. In this way, the ink-jet printing apparatus is maintained in a state where ink droplets can smoothly be ejected.

As a time measurement means for such periodic recovery operations, for example, Patent Document 1 describes an image processing device that uses a real-time clock (RTC) to which a main power supply and a secondary power supply are connected, and continues time measurement processing using the secondary battery while the main power supply is off.

### CITATION LIST

### PATENT LITERATURE

PTL1: Japanese Patent Laid-Open No. 2007-215034

### SUMMARY OF INVENTION

### TECHNICAL PROBLEM

In order to meet recent demands for ink-jet printing apparatuses, such as space saving and cost reduction, it is necessary to continue time measurement even while the main power is off, with a simpler and less expensive configuration without an RTC and a secondary battery.

The present invention provides a technology that enables time measurement even in a standby state, with a simpler and less expensive configuration.

### SOLUTION TO PROBLEM

A printing apparatus according to one embodiment of the present invention comprises the following configurations. Thus, a printing apparatus comprises:
control means for controlling the printing apparatus;
output means for outputting at least one clock signal by oscillating with supplied power;
at least one first time measurement means for measuring time in response to an input of the at least one clock signal; and
power supply means for stopping power supply to the control means and continuing power supply to the output means and the at least one first time measurement means, in a standby state of the printing apparatus,
wherein when the printing apparatus is shifted from the standby state to an operating state, the control means executes predetermined processing if a time measurement value of the at least one first time measurement means exceeds a predetermined value, and
when the printing apparatus shifts to the standby state, the control means resets the time measurement value of the at least one first time measurement means.

### ADVANTAGEOUS EFFECTS OF INVENTION

The present invention brings about advantageous effects of enabling time measurement even in a standby state, with a simpler and less expensive configuration.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a perspective view of an outer appearance showing an overview of an ink-jet printing apparatus according to Embodiment 1 of the present invention.
FIG. 2 is a block diagram illustrating a configuration of the printing apparatus according to Embodiment 1.
FIG. 3 is a diagram illustrating an activation sequence performed when the printing apparatus according to Embodiment 1 is powered on.
FIG. 4 is a diagram illustrating a sequence performed when the printing apparatus according to Embodiment 1 transitions from an operable state to a standby state.
FIG. 5 is a diagram illustrating a sequence performed when the printing apparatus according to Embodiment 1 shifts to the operable state in response to a power saving control IC detecting pressing of a power key in the standby state.
FIG. 6 is a block diagram illustrating a configuration of a counter control unit of the power saving control IC according to Embodiment 1.
FIG. 7 is a flowchart of processing that is performed when the printing apparatus according to Embodiment 1 shifts to the standby state and then shifts again to the operating state, based on an elapsed time since the last preliminary ejection or an elapsed time since the last printing.
FIG. 8 is a block diagram illustrating a configuration of a counter control unit of a power saving control IC according to Embodiment 2.
FIG. 9 is a flowchart of processing in which the printing apparatus according to Embodiment 2 shifts to the standby state, and then transitions to the operating state in response to the count value of a periodic communication counter reaching the upper limit.
FIG. 10 is a diagram showing examples of clock signals that are output to a last preliminary ejection time counter and a last print time counter from a base counter according to Embodiment 1.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### Embodiment 1

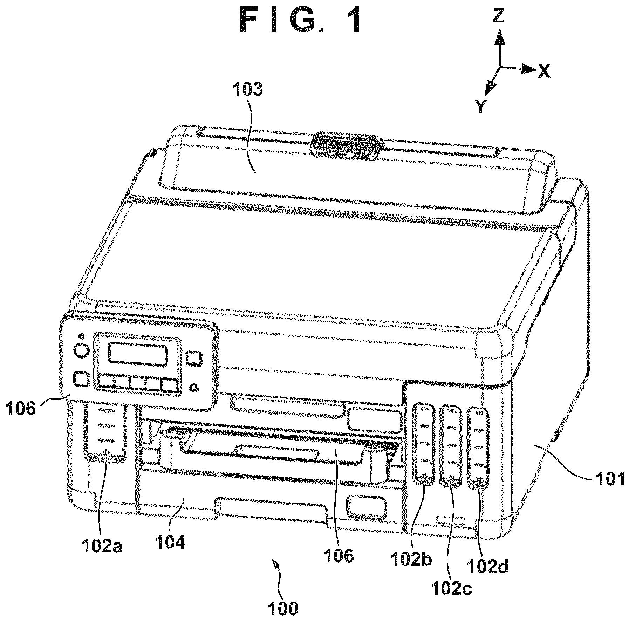

FIG. 1 is a perspective view of an outer appearance showing an overview of an ink-jet printing apparatus 100 (hereinafter, referred to simply as "printing apparatus") according to Embodiment 1 of the present invention. Note that "printing" according to the present embodiment includes not only the formation of significant information such as characters and figures but also the formation of images, patterns, and the like on printing media in a broad meaning regardless of whether they are significant or insignificant, or the processing of the media. That is to say, "printing" is regardless of whether information is actualized so as to be visually perceived by humans. Also, in the present embodiment, sheet paper is assumed to be the "printing medium" but cloth, a plastic film, and the like may also be used.

The printing apparatus 100 includes a housing (exterior part) 101, a printing head (not shown) that performs printing operations on a printing medium, and ink tanks 102 (102a to 102d), which are ink containers that store ink to be supplied to the printing head. The ink tanks 102 are located on the front face of the housing 101, and the printing head is connected to the ink tanks 102a to 102d for respective colors via ink flow paths corresponding to the respective colors. The printing apparatus 100 is provided with the black ink tank 102a on the left side as viewed from the front face of the printing apparatus 100, and the cyan ink tank 102b, the magenta ink tank 102c, and the yellow ink tank 102d on the right side as viewed from the front face of the printing apparatus 100. The printing apparatus 100 is also provided with a paper tray 103 and a paper cassette 104, which serve as paper feeding units to take printing media such as paper and sheets into the device. The printing medium that has completed printing is discharged from a discharge part 105 to the outside of the printing apparatus 100. Furthermore, the printing apparatus 100 is also provided with an operation unit 106 used by the user to input instructions and the like.

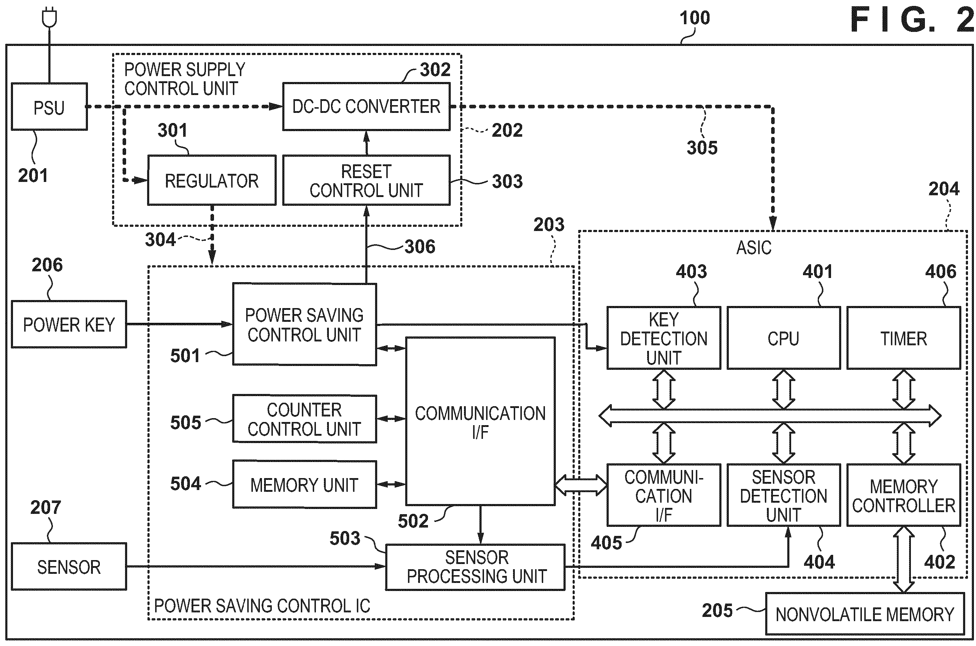

FIG. 2 is a block diagram illustrating a configuration of the printing apparatus 100 according to Embodiment 1. Note that FIG. 2 mainly shows parts of the printing apparatus 100 that relate to power supply. In FIG. 2, for convenience of explanation, regarding the internal configurations of a power supply control unit 202, a power saving control IC 203, and an ASIC 204, one processing block include a plurality of processing units, but each processing unit may be independent. Alternatively, the power supply control unit 202 and the power saving control IC 203 may be combined into a single IC. In FIG. 2, the power supply path is indicated by a dotted line.

Upon supply of commercial power from outside the device, a power supply unit (PSU) 201 converts the supplied power into a DC voltage such as 32 V or 24 V that is easy to use inside the printing apparatus 100, through AC-DC conversion. Upon receiving the output voltage from the PSU 201, the power supply control unit 202 generates an even lower power supply voltage such as 5 V, 3.3 V, or 0.9 V using a regulator 301 or a DC-DC converter 302, and supplies it to the power saving control IC 203 or the ASIC 204. A reset control unit 303 shifts the power supply control unit 202 to a reset state when a reset signal 306 from the power saving control IC 203 has a low level. Regulator power 304 output by the regulator 301 always supplies a predetermined voltage to the power saving control IC 203 as long as power is supplied from the PSU 201, regardless of the reset state of the power supply control unit 202. This allows the power saving control IC 203 to operate even in the reset state.

On the other hand, the DC-DC converter 302 stops its output in the reset state. That is, in the reset state, the power supply control unit 202 completely stops supplying system power 305, which power supplied to the ASIC 204. This allows the printing apparatus 100 to shift to a power-saving state in which the power consumption of the printing apparatus 100 is minimal.

Next, the configuration of the ASIC 204 will be described.

When the ASIC 204 is powered on by the system power 305, a CPU 401 reads a control program stored in a nonvolatile memory 205 via a memory controller 402 and starts controlling the printing apparatus 100 in accordance with this control program. A key detection unit 403 can detect whether a power key (power source key) 206 is pressed via the power saving control IC 203. When the power key 206 is pressed, the printing apparatus 100 can transition to another power state. Similarly, a sensor detection unit 404 can detect the state of a sensor provided inside the device via the power saving control IC 203. By detecting a change in the state of the sensor, the ASIC 204 performs the necessary processing as appropriate. Furthermore, the ASIC 204 can communicate with the power saving control IC 203 via a communication I/F 405. The communication protocol used by the communication I/F 405 may be a protocol of an I2C or UART interface, or may have a configuration that allows connection via high-speed communication such as PCIe. The communication protocol of the communication I/F 405 may be determined according to the circumstances of the device. A timer 406 is used to perform time measurement under the control of the CPU 401. Note that the timer 406 can measure multiple elapsed times, and the time measurement function of the timer 406 may be implemented by a timer function of the CPU 401 or by a software function in which the CPU 401 executes a program to perform time measurement.

Next, the configuration of the power saving control IC 203 will be described.

A power saving control unit 501 controls the reset signal 306 to the reset control unit 303 of the power supply control unit 202. When the supply of the regulator power 304 is started, the power saving control IC 203 controls the reset signal 306 based on the detection of key pressing of the power key 206 and a state signal from the ASIC 204 received via a communication I/F 502. By controlling the output of the DC-DC converter 302 of the above-described power supply control unit 202 using the reset signal 306, the power state of the printing apparatus 100 can be switched. Also, the power saving control unit 501 notifies the key detection unit 403 of the ASIC 204 of the state where the power key 206 is pressed, which enables the ASIC 204 as well to detect the pressing of the power key 206 when power is being supplied to the ASIC 204.

On the other hand, while the power supply to the ASIC 204 is stopped, the power saving control unit 501 only needs to detect the pressing of the power key 206. Thus, the power saving control unit 501 can be realized with a minimum circuit configuration in which, when the pressing of the power key 206 is detected, the reset signal 306 to the reset control unit 303 is canceled (set to a high level). The power saving control IC 203 includes, in addition to the power saving control unit 501, a sensor processing unit 503, a memory unit 504, and a counter control unit 505. The sensor processing unit 503 detects a change in the state of a sensor 207 mounted on the inside of the device. The sensor processing unit 503 uses a simple circuit that holds a specific value when it detects a change in the output of the sensor 207 so as to be able to operate with less power even in a power-saving state. The memory unit 504 is a memory that can hold specific values depending on the operation of the printing apparatus 100. When the memory unit 504 only includes the minimum necessary storage area such as a flip-flop, it can operate with less power even in the power-saving state. The memory state of this flip-flop is reset by a signal from the communication I/F 502. Also, the counter control unit 505 can be used to count (measure) necessary time. These control units can communicate with the ASIC 204 via the communication I/F 502.

Since, in the later-described power-saving state, power is not supplied to the ASIC 204, the printing apparatus 100 may shift to a non-operating state to further reduce power consumption in the communication I/F 502. By implementing the power saving control IC 203 with a minimal circuit configuration as described above, the printing apparatus 100 can significantly reduce power consumption while maintaining necessary functions even when power supply to the ASIC 204 is stopped in the power-saving state.

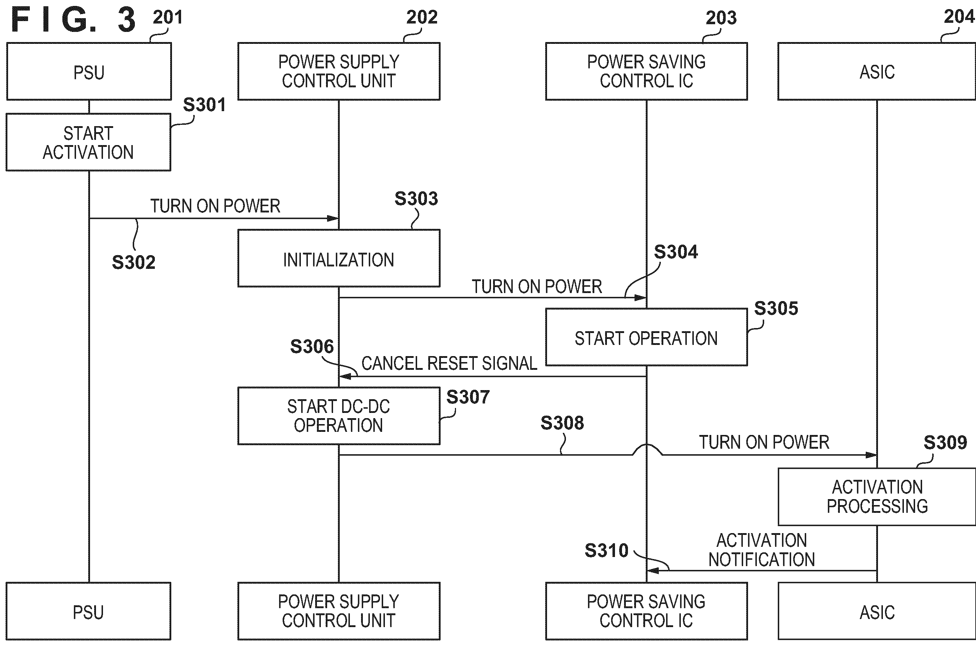

Next, operation modes of the printing apparatus 100 according to Embodiment 1 and shifting to the operation modes will be described with reference to FIGS. 3 to 5.

The printing apparatus 100 can take on two states: an operable state in which power is being supplied to the ASIC 204; and a standby state (power-saving state) in which power is being supplied from the outside of the device but not to the ASIC 204, which is the main control unit. The printing apparatus 100 according to Embodiment 1 can take on a soft-on state in which the user can operate the printing apparatus 100 through a display, as well as a power-saving state in which power-saving control is being performed on unused functional blocks when the printing apparatus 100 is temporarily not operated. Furthermore, the printing apparatus 100 can take on an automatic power-on enabled state where the printing apparatus 100 can shift to the soft-on state immediately upon receiving a print job from a USB or wireless LAN, although the display unit does not show any indication. In other words, upon supply of power to the ASIC 204, the printing apparatus 100 is configured to be able to operate all modes in which the printing apparatus 100 can be operated. Also, the standby state refers to a state in which the printing apparatus 100 can shift to the operable state upon accepting specific processing, in a minimum power consumption state in which the power supply to the ASIC 204 is stopped.

FIG. 3 is a diagram illustrating an activation sequence performed when the printing apparatus 100 according to Embodiment 1 is powered on.

In S301, the PSU 201 starts generating a power supply voltage that is to be used inside the device when power is supplied externally. Then, in S302, the power supply voltage generated by the PSU 201 is supplied to the power supply control unit 202. In S303, the power supply control unit 202 starts operating the regulator 301 in response to the supply of the power supply voltage. In S304, the power supply control unit 202 starts supplying the regulator power 304 to the power saving control IC 203. With this, in S305, the power saving control IC 203 starts operating in response to the supply of the regulator power 304. At this time, the power saving control IC 203 performs reset processing of the inside of the power saving control IC 203 in response to the supply of the regulator power 304. Through this reset processing, the power saving control unit 501, the communication I/F 502, the sensor processing unit 503, the memory unit 504, and the counter control unit 505 are reset to a usable state. Then, in S306, the power saving control IC 203 cancels the reset signal 306 that is to be output to the reset control unit 303 of the power supply control unit 202 (sets the signal 306 to a high level), at a timing at which the reset processing is completed.

With this, in S307, the DC-DC converter 302 of the power supply control unit 202 starts operating, and in S308, the power supply control unit 202 starts supplying the system power 305 to the ASIC 204. In S309, as a result of the supply of the system power 305, the ASIC 204 starts to be activated in accordance with the control program stored in the nonvolatile memory 205. Then, in S310, when activation preparations are complete, the ASIC 204 notifies the power saving control IC 203 that the activation is complete.

Note that although descriptions of the processing in S310 onwards are omitted, the ASIC 204 recognizes the state and shifts to the next operation. For example, when the ASIC 204 detects the pressing of the power key 206 after the activation, the ASIC 204 can directly shift to the soft-on state, where the ASIC 204 can be operated by the user. After the processing in S309, the ASIC 204 can read information set by the user from the nonvolatile memory 205 to switch the state according to the information. For example, if the above-mentioned automatic power-on enabled state is set, the ASIC 204 shifts to the automatic power-on enabled state. Also, if it is determined that there is no need to maintain the operable state after the power saving control IC 203 has canceled the reset signal 306 (has set the signal 306 to a high level) in S306, the ASIC 204 may realize power saving by transitioning to the standby state.

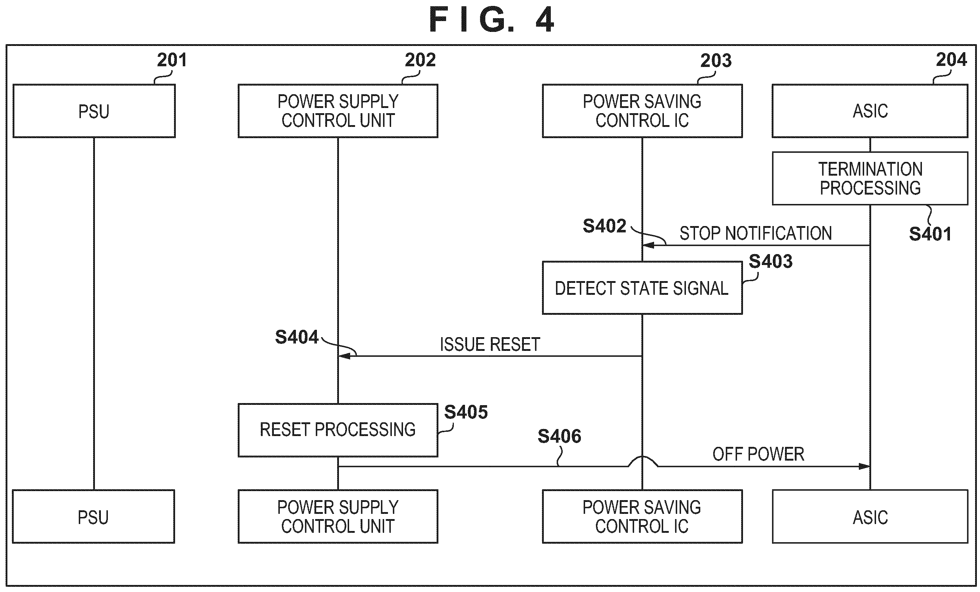

Next, a sequence performed when the state transitions from the operable state to the standby state will be described with reference to FIG. 4.

FIG. 4 is a diagram illustrating a sequence performed when the printing apparatus 100 according to Embodiment 1 transitions from the operable state to the standby state.

First, in S401, upon detecting the pressing of the power key 206 in the operable state, the ASIC 204 determines that the user has made a request to terminate the device, and starts termination processing of the ASIC 204. When the termination processing of the ASIC 204 is completed, in S402, a stop notification is issued to the power saving control IC 203 via the communication I/F 405. Upon receiving the stop notification, the power saving control IC 203 determines in S403 whether or not shifting to the reset state is possible based on the state signal from the ASIC 204. If it is determined that shifting to the reset state is possible, the power saving control IC 203 outputs the reset signal 306 to the power supply control unit 202 at a low level in S404. Upon receiving this reset signal 306, the power supply control unit 202 performs internal reset processing in S405 and stops the operation of the DC-DC converter 302. As a result, the power supply control unit 202 stops supplying the system power 305 to the ASIC 204 in S406. As a result, the ASIC 204 shifts to the standby state.

Note that descriptions of S406 onwards are omitted, but the ASIC 204 remains in the standby state until pressing of the power key 206 is detected. By performing processing in S401 to S406 above, the ASIC 204 can transition from the operable state to the standby state. In S401, the termination processing of the ASIC 204 is started in response to the detection of the pressing of the power key 206, but the shifting to the processing is possible even on the condition other than the pressing of the power key 206, as long as the termination condition is met. For example, soft-off time can be set, and the processing may shift to the termination processing when the set time is detected. Alternatively, a configuration is also possible in which the device automatically shifts to the standby state if there is no user operation for a certain period of time.

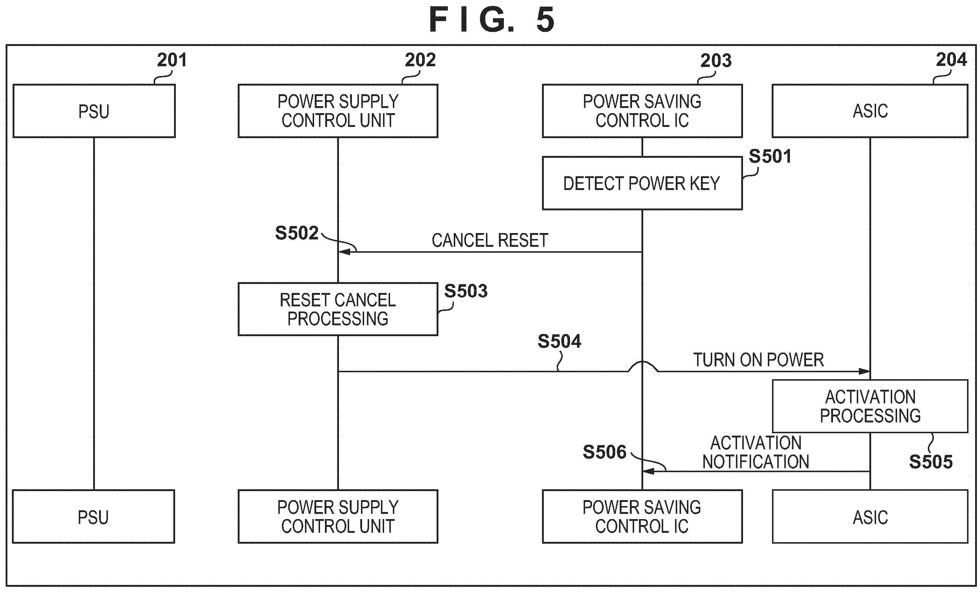

Next, FIG. 5 is a diagram illustrating a sequence performed when the printing apparatus 100 according to Embodiment 1 shifts to the operable state in response to the power saving control IC 203 detecting the pressing of the power key 206 in the standby state.

In S501, the power saving control IC 203 detects the pressing of the power key 206. With this, in S502, the power saving control IC 203 sets the reset signal 306 to a high level to cancel the reset of the power supply control unit 202. With this, in S503, the power supply control unit 202 performs reset cancel processing and starts operation of the DC-DC converter 302. Accordingly, in S504, the power supply control unit 202 starts supplying the system power 305 to the ASIC 204. In S505, as a result of the supply of the power, the ASIC 204 reads the control program stored in the nonvolatile memory 205 via the memory controller 402, and starts processing in accordance with the control program, that is, starts activation. Then, in S506, when the activation preparations are complete, the ASIC 204 notifies the power saving control IC 203 that the activation preparations are complete.

Note that descriptions of S506 onwards are omitted, but the printing apparatus 100 remains in the operable state until the condition for transition to the standby state is met. Thus, the printing apparatus 100 can transition from the standby state to the operable state by performing the processing in S501 to S506 above. Note that the transitions shown in FIGS. 4 and 5 may be made as appropriate by pressing the power key 206 or setting the soft-off time.

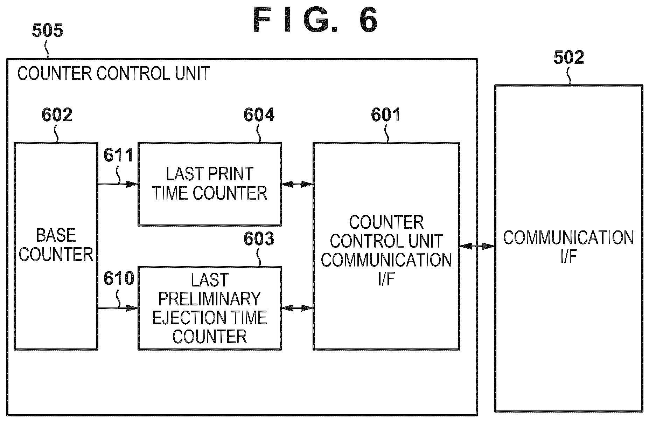

FIG. 6 is a block diagram illustrating a configuration of the counter control unit 505 of the power saving control IC 203 according to Embodiment 1.

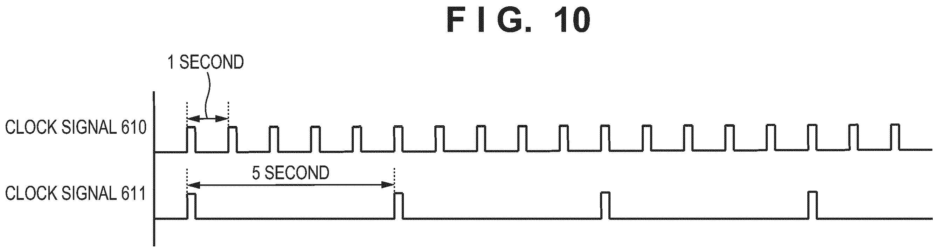

A counter control unit communication I/F 601 communicates with the communication I/F 502 of the power saving control IC 203 to access a last preliminary ejection time counter 603 and a last print time counter 604 of the counter control unit 505, which will be described later. A base counter 602 starts counting upon being supplied with the regulator power 304 from the regulator power 304. As shown in FIG. 10, for example, the base counter 602 outputs a clock signal (trigger signal) 610 with a cycle of 1 second to the last preliminary ejection time counter 603 and outputs a clock signal 611 with a cycle of 5 seconds to the last print time counter 604. The cycles of the multiple clock signals output by the base counter 602 are determined by the resolution required by the counters to which the clock signals are input. In the example of FIG. 10, a counter built inside the base counter 602 outputs the clock signals 610 and 611 of two frequencies, namely, a cycle of 1 second and a cycle of 5 seconds. Accordingly, there is no need to measure a time longer than 5 seconds, and thus the base counter 602 is configured to count up to 5 seconds, clear to 0, and count up again. For an oscillation circuit required for the built-in counter to operate, an appropriate circuit configuration needs only be selected according to the accuracy required for the built-in counter. For example, the oscillation circuit may be a simple LCR oscillation circuit, a crystal oscillator, or an oscillation circuit using a transistor or operational amplifier. The base counter 602 may also include an oscillation circuit and a frequency dividing circuit that performs frequency division on a clock signal from the oscillation circuit and outputs the resulting clock signals.

The last preliminary ejection time counter 603 measures the time elapsed since the printing head last performed a preliminary ejection operation. The last preliminary ejection time counter 603 counts up based on the clock signal 610 input from the base counter 602. The last preliminary ejection time counter 603 includes a register that sets the upper limit of the counter accessible from the counter control unit communication I/F 601, a register that reads the current counter value (time measurement value), and a register that resets the counter value. Therefore, when preliminary ejection is performed, the last preliminary ejection time counter 603 resets its counter value in accordance with a reset instruction from the ASIC 204, and starts counting based on the clock signal 610. When the counter value reaches the set upper limit, the counting is stopped.

The last print time counter 604 measures the time elapsed since the last printing (printing) was performed. The last print time counter 604 counts up based on the clock signal 611 input from the base counter 602. Also, similar to the last preliminary ejection time counter 603, the last print time counter 604 includes a register that sets the upper limit of the counter accessible from the counter control unit communication I/F 601, a register that reads the current counter value (time measurement value), and a register that resets the counter value. Therefore, when the printing operation is complete, the last print time counter 604 resets its counter value in accordance with a reset instruction from the ASIC 204, and starts counting based on the clock signal 611. When the counter value reaches the set upper limit, the counting is stopped.

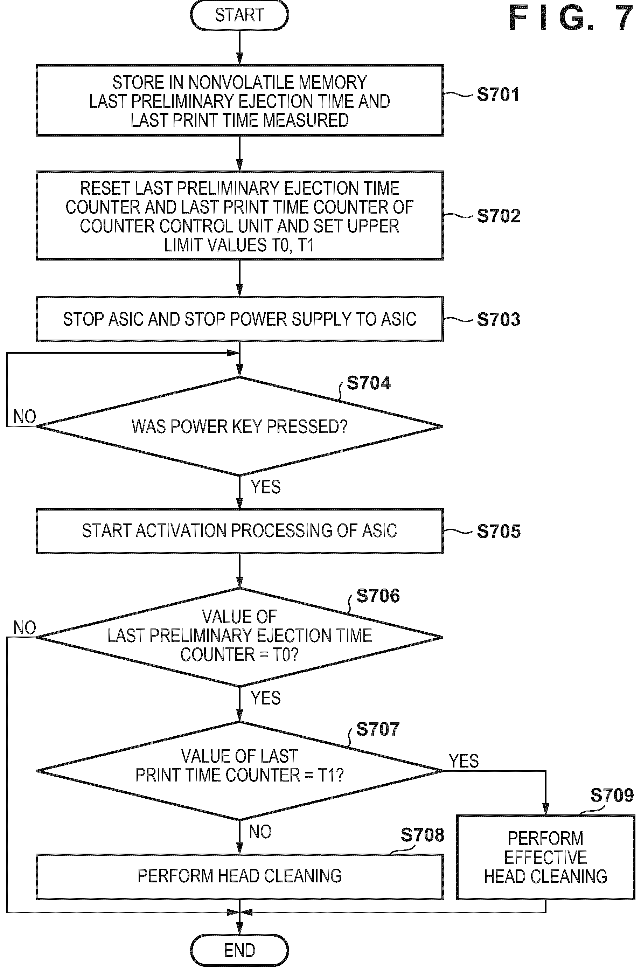

FIG. 7 is a flowchart of processing that is performed when the printing apparatus 100 according to Embodiment 1 shifts to the standby state and then shifts again to the operating state, based on elapsed time since the last preliminary ejection or elapsed time since the last printing. Note that it is here assumed that, in the operable state, the elapsed time since the printing head last performed preliminary ejection (last preliminary ejection time) and the elapsed time since the last printing (last print time) are measured by the ASIC 204 using the function of the above-described timer 406.

First, in S701, the ASIC 204 acquires the last preliminary ejection time and the last print time measured at the time from the timer 406, stores the acquired times in the nonvolatile memory 205, and proceeds to S702. Next, in S702, the ASIC 204 resets the values of the last preliminary ejection time counter 603 and the last print time counter 604 of the counter control unit 505 to 0. Furthermore, the upper limit value of the last preliminary ejection time counter 603 is set to T0 and the upper limit value of the last print time counter 604 is set to T1. The value of T0 is set so that the sum of the last preliminary ejection time and T0 stored in the nonvolatile memory 205 in S701 is equal to a threshold for determining whether or not to perform the recovery operation. That is, for example, if the recovery operation is desired to be performed in 50 hours and the last preliminary ejection time stored in the nonvolatile memory 205 is 10 hours, the upper limit value T0 is set to 40 hours. Also, similar to T0, T1 is set so that the sum of the last print time and T1 stored in nonvolatile memory 205 in S701 is equal to a threshold for determining whether or not to perform the recovery operation. Similarly, for example, if the recovery operation is desired to be performed in 100 hours and the last print time stored in the nonvolatile memory 205 is 40 hours, the upper limit value of T1 is set to 60 hours.

Next, in S703, the printing apparatus 100 transitions from the operable state to the standby state. With this, in the printing apparatus 100, after the ASIC 204 performs the termination processing (S401), the power supply to the ASIC 204 is stopped in accordance with the above-described sequence shown in FIG. 4. Then, the printing apparatus 100 remains in the standby state until the pressing of the power key 206 is detected in S704. In this standby state, the last preliminary ejection time counter 603 and the last print time counter 604 are performing the time measurement operation, and when the count values reach the set maximum values (predetermined values), they stand by in a state where the time measurement operation is completed.

Then, when the pressing of the power key is detected in S704, the procedure advances to S705. In S705, the printing apparatus 100 executes the activation processing in accordance with the above-described sequence shown in FIG. 5, and when the system power 305 is supplied in S504 in FIG. 5, the ASIC 204 executes the activation processing and proceeds to S706.

In S706, the ASIC 204 reads the counter value of the last preliminary ejection time counter 603 and determines whether the value has reached the upper limit value T0. If the upper limit value T0 is not reached, this processing ends. On the other hand, if the upper limit value T0 is reached, the procedure proceeds to S707. In S707, the ASIC 204 reads the counter value of the last print time counter 604 and determines whether the value has reached the upper limit value T1. If the upper limit value T1 is reached, the procedure proceeds to S708. In S708, the ASIC 204 performs normal head cleaning based on the result indicating that the count value of the last preliminary ejection time counter 603 is the upper limit value T0 and the count value of the last print time counter 604 is not T1, and ends this processing.

On the other hand, if the upper limit value T1 is reached by the counter value of the last print time counter 604, the procedure proceeds to S709. In S709, the ASIC 204 performs more effective head cleaning than the normal head cleaning based on the result indicating that the count value of the last preliminary ejection time counter 603 is the upper limit value T0 and the count value of the last print time counter 604 is the upper limit value T1, and ends this processing. Also, the ASIC 204 reads the times measured by the last preliminary ejection time counter 603 and the last print time counter 604 during the standby time and adds them to the last preliminary ejection time and last print time stored in the nonvolatile memory. With this, when the device returns to the normal state, the elapsed time during the standby time is added to the time measured up to that point, thereby updating the time to the latest elapsed time.

Note that in Embodiment 1, since the time (bit width) that can be measured by the last preliminary ejection time counter 603 and the last print time counter 604 is finite, the ASIC measures the time in the normal operating state and the elapsed time in the standby state. Furthermore, each counter stops time measurement operation while holding its time measurement value when a set upper limit is reached, so the ASIC can detect it when the time measurement value reaches the upper limit during the standby state.

As described above, according to Embodiment 1, even during the standby state, the elapsed time since the last preliminary ejection and the elapsed time since the last printing can be measured with low power consumption. Then, when the device transitions from the standby state to the operating state, the recovery processing can be performed according to whether or not the elapsed time has reached the maximum value.

### Embodiment 2

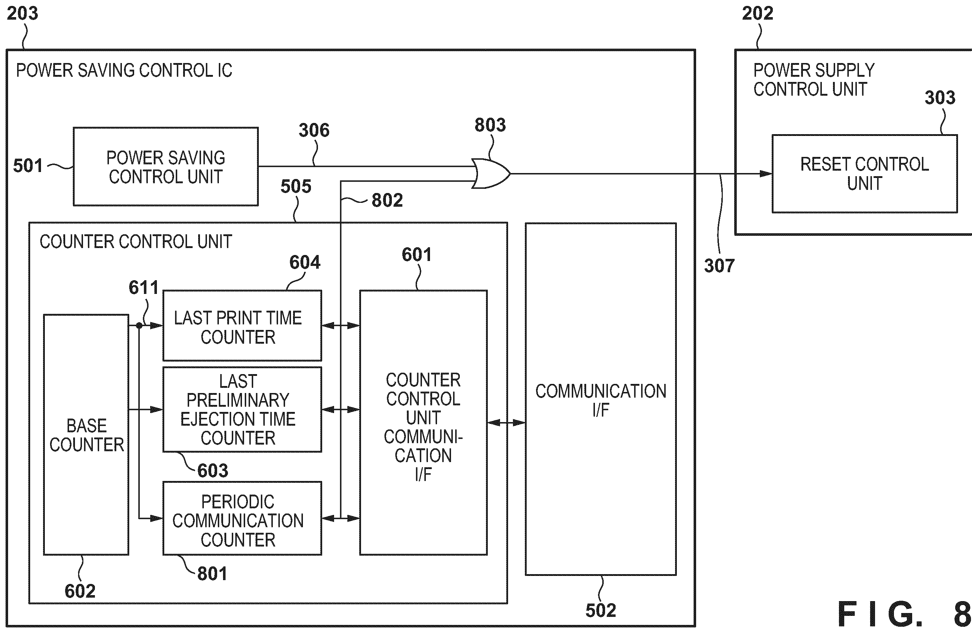

FIG. 8 is a block diagram illustrating a configuration of the counter control unit 505 of the power saving control IC 203 of the printing apparatus 100, according to Embodiment 2. Here, the internal configuration of the counter control unit 505 and its connection to related peripheral units are mainly described. Note that in FIG. 8, the same reference numbers are given to the common components shown in FIG. 6 above, and the descriptions thereof are omitted.

A periodic communication counter 801 is provided so as to be able to measure time even in the standby state in order to periodically notify a center server (not shown) of the operating status of the printing apparatus 100 and the remaining amounts of consumables such as ink via the network. The periodic communication counter 801 is counted up by the clock signal 611 every 5 seconds output from the base counter 602 to the last print time counter 604. The periodic communication counter 801 includes a register that sets the upper limit of the counter accessible from the counter control unit communication I/F 601, a register that reads the current counter value, and a register that resets the counter value. Therefore, when a notification is given to the center server, the periodic communication counter 801 resets its counter value in accordance with a reset instruction from the ASIC 204, and starts counting based on the clock signal 611. When the counter value reaches the set upper limit, the periodic communication counter 801 stops counting and asserts a periodic communication reset cancel signal 802.

That is, when the counter value of the periodic communication counter 801 reaches the upper limit value set in the register in the standby state, the periodic communication counter 801 sets the periodic communication reset cancel signal 802 to a high level. This periodic communication reset cancel signal 802 is logically added to the above-described reset signal 306, which is output from the power saving control unit 501, at an OR gate 803, and the logical sum is output to the reset control unit 303 as a reset signal 307. Accordingly, when the periodic communication reset cancel signal 802 is output at a high level, the reset signal 307 is at a high level. As a result, in the same way as when the reset signal 306 is canceled in Embodiment 1, the activation sequence from S503 to S506 is executed. The ASIC 204 thus activated can communicate with the center server via the network about the operating status of the printing apparatus 100 and the remaining amounts of consumables such as ink, as described above.

Note that as described in Embodiment 1, when the state shifts to the reset state based on the state signal from the ASIC 204, the periodic communication reset cancel signal 802 is at a low level, so the reset signal 306 can shift to the standby state by being switched to a low level.

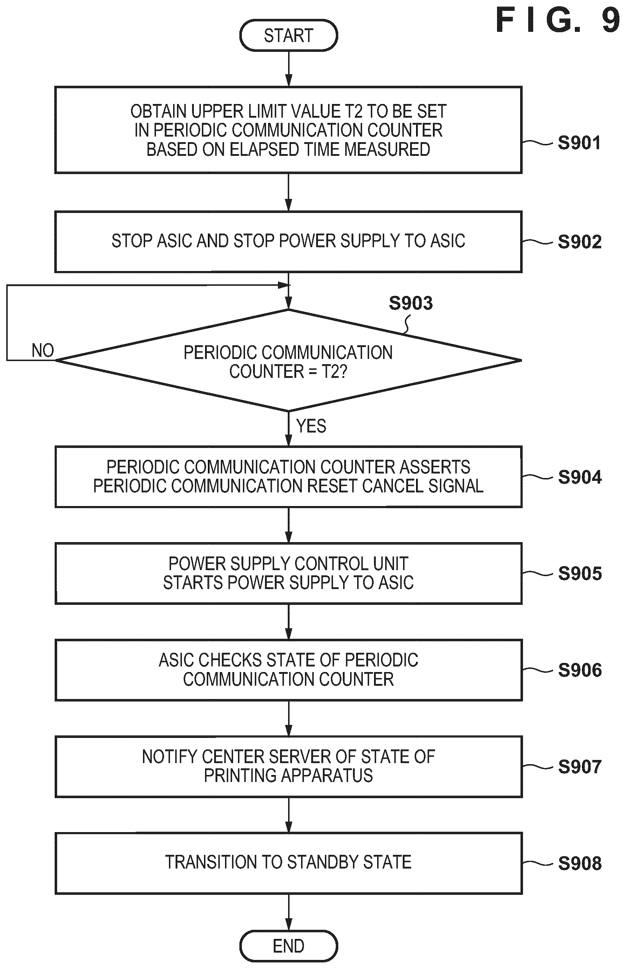

FIG. 9 is a flowchart of processing in which the printing apparatus 100 according to Embodiment 2 shifts to the standby state, and then transitions to the operating state in response to the count value of a periodic communication counter reaching the upper limit. It is assumed that in the operable state, an elapsed time t2 since the last communication with the center server is measured by the periodic communication counter 801.

First, in S901, the ASIC 204 obtains an upper limit value (remaining time) T2 to be set in the periodic communication counter 801 based on the elapsed time since the last communication with the center server, which is measured by the ASIC 204 using the function of the timer 406 and the like. Then, the periodic communication counter 801 is reset, the upper limit value T2 is set in the periodic communication counter 801, and the procedure proceeds to S902. Here, the value of T2 is set so that the sum of the elapsed time measured by the ASIC 204 and the upper limit value T2 is equal to a threshold (time to perform periodic communication) for determining whether or not to communicate with the center server. In S902, the printing apparatus 100 transitions from the operable state to the standby state. With this, in the printing apparatus 100, the ASIC 204 performs the termination processing (S401) and then the power supply to the ASIC 204 is stopped, in accordance with the above-described sequence shown in FIG. 4.

Here, the standby state continues until the count value of the periodic communication counter 801 reaches the upper limit value T2 in S903 when no pressing of the power key 206 or other event occurs. When the count value of the periodic communication counter 801 reaches the upper limit value T2 in S903, the procedure proceeds to S904. In S904, the periodic communication counter 801 outputs the periodic communication reset cancel signal 802 at a high level and proceeds to S905. Since the reset signal 307 is switched to a high level, the reset state of the power supply control unit 202 is canceled in S905. With this, the system power 305 is started to be supplied to the ASIC 204, and the ASIC 203 is activated. Then, the procedure proceeds to S906, where the ASIC 204 checks the counter value of the periodic communication counter 801. Here, if it is confirmed that the counter value of the periodic communication counter 801 has reached the upper limit value T2, the procedure proceeds to S907. In S907, the ASIC 203 notifies the center server of the state of the printing apparatus 100. Then, the procedure proceeds to S908, where the ASIC 204 again transitions to the standby state in accordance with the sequence of FIG. 4.

As described above, according to Embodiment 2, even during the standby state, the printing apparatus can periodically measure the elapsed time to be notified to the center server, with low power consumption. When the elapsed time reaches a predetermined time, the printing apparatus can be transitioned from the standby state to the operating state to notify the center server of the operating status and the remaining amounts of consumables and the like.

### Other Embodiments

The present invention can also be implemented by processing of providing a program for realizing one or more functions of the above-described embodiments to a system or device via a network or a storage medium, and one or more processors in a computer of the system or device reading and executing the program. The present invention can also be implemented by a circuit (for example, ASIC) that realizes one or more functions.

While an embodiment has been described, the invention is not limited to the foregoing embodiments, and various variations/changes are possible within the spirit of the invention. Therefore, to apprise the public of the scope of the present invention, the following claims are made.

This application claims priority from Japanese Patent Application No. 2022-143934 filed September 9, 2022, which is hereby incorporated by reference herein.

## Claims

1. A printing apparatus comprising:
control means for controlling the printing apparatus;
output means for outputting at least one clock signal by oscillating with supplied power;
at least one first time measurement means for measuring time in response to an input of the at least one clock signal; and
power supply means for stopping power supply to the control means and continuing power supply to the output means and the at least one first time measurement means, in a standby state of the printing apparatus,
wherein when the printing apparatus is shifted from the standby state to an operating state, the control means executes predetermined processing if a time measurement value of the at least one first time measurement means exceeds a predetermined value, and
when the printing apparatus shifts to the standby state, the control means resets the time measurement value of the at least one first time measurement means.

2. The printing apparatus according to claim 1, wherein
the control means further includes second time measurement means for measuring time, and
when the printing apparatus shifts to the standby state, the control means acquires a time measurement value of the second time measurement means, stores the acquired time measurement value in a nonvolatile memory, and resets the time measurement value of the at least one first time measurement means, and when the printing apparatus is shifted from the standby state to the operating state, the control means executes the predetermined processing if a sum of the time measurement value stored in the nonvolatile memory and the time measurement value of the at least one first time measurement means exceeds a predetermined value.

3. The printing apparatus according to claim 2, wherein
when the printing apparatus shifts to the standby state, the control means sets an upper limit value based on the time measurement value stored in the nonvolatile memory and the predetermined value, in the at least one first time measurement means, and
when the printing apparatus is shifted from the standby state to the operating state, the control means determines whether or not the sum exceeds the predetermined value based on whether or not the time measurement value of the at least one first time measurement means has reached the upper limit value.

4. The printing apparatus according to claim 3, wherein
the upper limit value is obtained by subtracting the time measurement value stored in the nonvolatile memory from the predetermined value.

5. The printing apparatus according to claim 3, wherein
when the time measurement value of the at least one first time measurement means reaches the upper limit value, the at least one first time measurement means stops a time measurement operation while holding the time measurement value.

6. The printing apparatus according to claim 1, wherein
the output means includes:
an oscillation circuit configured to oscillate with supplied power; and
a frequency dividing circuit configured to perform frequency division on a clock signal output by the oscillation circuit and output the resulting signals as first and second clock signals of different frequencies.

7. The printing apparatus according to claim 6, wherein
the at least one first time measurement means at least includes:
a third time measurement means for measuring time in response to an input of the first clock signal; and
a fourth time measurement means for measuring time in response to an input of the second clock signal.

8. The printing apparatus according to claim 7, wherein
the third time measurement means measures an elapsed time since a last preliminary ejection, and
the fourth time measurement means measures an elapsed time since a last printing operation.

9. The printing apparatus according to claim 6, wherein
a frequency of the first clock signal is higher than a frequency of the second clock signal.

10. The printing apparatus according to claim 1, wherein
the predetermined processing is cleaning of a printing head.

11. The printing apparatus according to claim 2, wherein
the second time measurement means is implemented by a timer function of a CPU of the control means.

12. The printing apparatus according to claim 2, wherein
the second time measurement means is implemented by time measurement of software executed by a CPU of the control means.

13. A printing apparatus comprising:
control means for controlling the printing apparatus;
output means for outputting a clock signal by oscillating with supplied power;
first time measurement means for measuring time in response to an input of the clock signal; and
power supply means for stopping power supply to the control means and continuing power supply to the output means and the first time measurement means, in a standby state of the printing apparatus,
wherein upon measuring remaining time in the standby state, the first time measurement means outputs a signal for canceling the standby state to the power supply means,
when the standby state is canceled and the printing apparatus is shifted to an operating state, the control means executes predetermined processing in response to time measurement of the first time measurement means, and
when the printing apparatus shifts to the standby state, the control means acquires remaining time until the predetermined processing is executed and sets the acquired remaining time in the first time measurement means.

14. The printing apparatus according to claim 13, wherein
the control means further includes second time measurement means for measuring time, and
when the printing apparatus shifts to the standby state, the control means acquires remaining time until the predetermined processing is executed and sets the acquired remaining time in the first time measurement means, based on a time measurement value of the second time measurement means.

15. The printing apparatus according to claim 14, wherein
when the printing apparatus shifts to the standby state, the control means acquires the remaining time by subtracting the time measurement value of the second time measurement means from an elapsed time until the predetermined processing is executed.

16. The printing apparatus according to claim 13, wherein
the output means includes an oscillation circuit for outputting the clock signal by oscillating with supplied power.

17. The printing apparatus according to claim 13, wherein
the predetermined processing is processing for notifying a server of an operating status of the printing apparatus or a remaining amount of a consumable.

18. The printing apparatus according to claim 14, wherein
the second time measurement means is implemented by a timer function of a CPU of the control means.

19. The printing apparatus according to claim 14, wherein
the second time measurement means is implemented by time measurement of software executed by a CPU of the control means.

20. A control method for controlling a printing apparatus including: control means for controlling the printing apparatus; output means for outputting at least one clock signal by oscillating with supplied power; at least one time measurement means for measuring time in response to an input of the at least one clock signal; and power supply means for stopping power supply to the control means and continuing power supply to the output means and the at least one time measurement means, in a standby state of the printing apparatus, the method comprising
when the printing apparatus is shifted from the standby state to an operating state, executing predetermined processing by the control means if a time measurement value of the at least one time measurement means exceeds a predetermined value, and
when the printing apparatus shifts to the standby state, resetting the time measurement value of the at least one time measurement means by the control means.

21. A control method for controlling a printing apparatus including: control means for controlling the printing apparatus; output means for outputting a clock signal by oscillating with supplied power; time measurement means for measuring time in response to an input of the clock signal; and power supply means for stopping power supply to the control means and continuing power supply to the output means and the time measurement means, in a standby state of the printing apparatus, the method comprising
upon measuring remaining time in the standby state, outputting a signal for canceling the standby state to the power supply means by the time measurement means,
when the standby state is canceled and the printing apparatus is shifted to an operating state, executing predetermined processing by the control means in response to time measurement of the time measurement means, and
when the printing apparatus shifts to the standby state, acquiring remaining time until the predetermined processing is executed by the control means, and setting the acquired remaining time in the first time measurement means by the control means.
